# EUROPEAN PATENT SPECIFICATION

(11) **EP 4 453 105 B1**
(45) Date of publication and mention of the grant of the patent: **01.04.2026**
(21) Application number: 21830440.0
(22) Date of filing: 20.12.2021
(51) Int. Cl.: C09D 5/00, C09D 175/06, C09D 175/04, C08J 7/046, C08J 7/043, C08J 7/04, B05D 7/02, C08G 18/38, C08G 18/40, C08G 18/42, C08G 18/54, C08G 18/62, C08G 18/79, B05D 7/00

(54) **MULTI-LAYER COATING SYSTEM FOR POLYCARBONATE SUBSTRATES**
MEHRSCHICHTIGES BESCHICHTUNGSSYSTEM FÜR POLYCARBONATSUBSTRATE
SYSTÈME DE REVÊTEMENT MULTICOUCHE POUR SUBSTRATS DE POLYCARBONATE

(43) Date of publication of application: 30.10.2024
(73) Proprietor: Akzo Nobel Coatings International B.V., 1077 WW Amsterdam (NL)
(72) Inventor: SMIT, Martijn Jelle, 1077 WW Amsterdam (NL)
(74) Representative: Akzo Nobel IP Department
(86) International application number: PCT/EP2021/086793
(87) International publication number: WO 2023/117034

(56) References cited:
- WO-A1-2014/138052
- US-A1- 2002 142 169
- US-A1- 2006 046 068
- US-A1- 2008 141 903
- US-A1- 2013 004 777
- US-A1- 2018 327 632

## Description

### Field of the invention

The present invention relates to a multi-layer coating system for polycarbonate substrates.

### Background

Plastic substrates and particularly polycarbonate substrates are used in manufacturing of vehicle parts, such as headlights, bumpers, tail gates and sunroof panels. The plastic parts need to be coated in order to protect the substrate against abrasion and weathering. However, it is difficult to coat plastic substrates and particularly polycarbonate because adhesion of most binders to a polycarbonate surface is poor (for example, polyurethanes).

It is known to improve adhesion to polycarbonate by using various surface treatments, such as treatments with plasma, ion beam, electron beam. Possible downsides of these techniques are the high costs of the necessary equipment and also the problematic implementation of such techniques into the line process. Another way to improve adhesion of organic coatings to polycarbonate is by using inorganic hard coats (e.g. silica) as a primer layer. These are often applied by plasma CVD. However, hard coats are expensive and difficult to apply.

It would be desirable to provide a liquid organic coating system that exhibits excellent adhesion to a polycarbonate substrate, without the need of complex pre-treatments of the surface or use of hardcoat layers. It is further desired that the coating system exhibits good adhesion, both dry and wet adhesion, and good scratch resistance, particularly wet scratch resistance. It is also desired that the coating system can be easily applied, e.g. by spraying, and can be integrated into a continuous process.

### Summary of the invention

In order to address the above-mentioned desires, the present invention provides, in a first aspect, a multi-layer coating system on a polycarbonate substrate, comprising:
- a primer layer applied directly to the substrate, wherein the primer layer is obtained from a primer coating composition, which comprises at least one polyaspartic acid ester and at least one polyisocyanate crosslinker, which primer coating composition does not comprise epoxy-functional alkoxysilanes and is free from compounds with reactive OH groups, and
- at least one organic topcoat layer overlying the primer layer, which coating layer is obtained from a coating composition different from the primer composition.

In another aspect, the present invention provides a method for forming a multi-layer coating on a polycarbonate substrate according to the invention, comprising the steps of:
a) applying the primer coating composition directly to the substrate,
b) applying at least one organic topcoat composition, different from the primer coating composition, to the coated substrate, and
c) curing the multi-layer coating.

In a further aspect, the invention also provides a coated automobile part.

### Detailed description of the invention

The multi-layer coating system on a polycarbonate substrate comprises at least the following coating layers: a primer layer and at least one topcoat layer overlying directly or indirectly the primer layer.

### Polycarbonate substrate

The polycarbonate substrate useful in the present invention can be any polycarbonate-containing substrate. Preferably, the polycarbonate substrate contains at least 99 wt.% polycarbonate. The polycarbonate substrate can include bisphenol A polycarbonate and other resin grades (such as branched, substituted etc.). It can be copolymerized or blended with other polymers such as PBT, PET, ABS or polyethylene. Examples of commercially available polycarbonate substrates include Makrolon^{®} AG2677, Makroblend^{®} DP7645, KU2-7609 by Covestro, or Lexan^{™} LS2 by Sabic.

According to the present invention, the polycarbonate substrate does not need any surface modification (e.g. with plasma) before application of the primer.

### Primer layer

The primer layer is located directly on the substrate. The primer layer is obtained from a primer coating composition, comprising at least one polyaspartic acid ester and at least one polyisocyanate crosslinker.

Polyaspartic acid esters are amino-functional compounds, which can be obtained by reacting a primary polyamine (preferably diamine) with a maleic or fumaric acid ester. Particularly preferred in the present invention are di-aspartic acid esters which preferably have the following general formula: 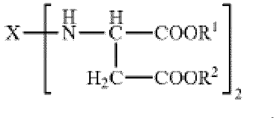 wherein R₁ and R₂ are selected, independently of one another, from C1 to C10 alkyl groups, such as for example methyl, ethyl or butyl groups, and X is a divalent group. R₁ and R₂ can be the same or different and are preferably not reactive towards isocyanate groups.

Polyaspartic acid esters can be obtained by reacting a primary diamine H₂N-X-NH_{2,} wherein X represents an aliphatic or cycloaliphatic group, with optionally substituted maleic or fumaric acid esters, preferably of the formula:

R₁OOC-C(H)=C(H)-COOR₂

Group X is obtained by removal of the amino groups from a primary diamine and can for example be a straight or branched divalent alkyl and/or cycloalkyl group, preferably a cycloalkyl group. Examples of suitable diamines include ethylene diamine, 1,2-diaminopropane, 1,4-diaminobutane, 1,6-diaminohexane, 2,2,4- and/or 2,4,4-trimethyl-1,6-diamino-hexane, 1-amino-3,3,5-trimethyl-5-aminomethylcyclohexane, 4,4'-diaminodicyclohexyl-methane, 3,3'-dimethyl-4,4'-diaminodicyclohexylmethane and 1,5-diamine-2-methyl-pentane. Preferably, group X contains are least one cycloalkyl group. Preferably, the diamine is selected from 4,4'-diaminodicyclohexylmethane and 3,3'-dimethyl-4,4'-diaminodicyclohexylmethane. Best results were achieved with 4,4'-diaminodicyclo-hexylmethane.

Examples of suitable maleic or fumaric acid esters include dimethyl maleate, diethyl maleate, dibutyl maleate and corresponding fumarates. Substituted maleic or fumaric acid esters are for example those substituted by methyl in the 2- and/or 3-position.

The reaction between the diamine and maleic or fumaric acid esters can be carried out at the conditions, known for this type of reaction to the person skilled in the art. For example, using a temperature of from 0 to 150°C can be used and the starting materials in such amounts that about one olefinic double bond is present for each primary amino group. Excess of the starting materials may be removed by distillation after the reaction. The reaction can be carried out solvent-free or in the presence of suitable organic solvents.

Suitable polyaspartic acid esters are commercially available as Desmophen NH 1420, NH 1520 and NH 1220 from Covestro.

Although not preferred, it is possible to additionally use other binder resins reactive to the polyisocyanate crosslinker, e.g. OH- or NH-functional binder resins. It is preferred that the polyaspartic acid ester is the main binder resin, which means that it constitutes more than 50 wt.%, preferably more than 80 wt.% of all binder resins, based on resin solids. More preferably, the polyaspartic acid ester is the only OH- or NH-functional binder resin in the primer composition.

In some embodiments, it is preferred that the described primer composition is free from compounds with reactive OH groups, such as polyesters polyols, polyacrylate polyols, polyurethane polyols, as they could reduce the pot-life of the primer composition. It is therefore preferred that the primer layer, when cured, does not contain polyurethanes (PU-free primer layer).

The polyisocyanate crosslinker includes multifunctional isocyanates (polyisocyanates) such as linear, branched, and/or cyclic polyisocyanates. Examples of multifunctional polyisocyanates include aliphatic diisocyanates such as hexamethylene diisocyanate and isophorone diisocyanate, and aromatic diisocyanates such as toluene diisocyanate and 4,4'-diphenylmethane diisocyanate. The isocyanate groups in the polyisocyanate crosslinker are preferably free, meaning that they are reactive at room temperature and are not blocked. Examples of other suitable polyisocyanates include isocyanurate trimers, allophanates, and uretdiones of diisocyanates. Suitable polyisocyanates are well known in the art and widely available commercially. Examples of commercially available isocyanates include DESMODUR^{®} N 3300A, DESMODUR^{®} Z 4470BA, DESMODUR^{®} N 3790, and DESMODUR^{®} N 3900 from Covestro.

Preferably, the molar ratio of the functional groups in polyaspartic acid ester to the polyisocyanate crosslinker groups is above stoichiometric, e.g. from 1:1.1 to 1:5, more preferably, from 1:1.5 to 1:3.

The primer composition is preferably clear (transparent), which means that the light can pass through it without appreciable scattering of light. This also means that the primer preferably does not contain components, which would make the composition opaque, such as pigments, fillers or extenders. Preferably, the primer composition does not contain any pigments, fillers or extenders.

The primer composition is preferably solventborne. Solventborne coating compositions comprise an organic solvent or a mixture of organic solvents as the major liquid phase. "Major liquid phase" means that organic solvents constitute at least 50 wt.% of the liquid phase, preferably at least 80 wt.%, more preferably at least 90 wt.%, in some embodiments even 100 wt.%. The primer composition preferably comprises 10-70 wt.%, more preferably 20-60 wt.% of organic solvents, based on the total weight of the primer composition. More preferably, the primer composition is non-aqueous, which means that it does not contain any water.

Example of suitable organic solvents include esters (such as ethyl acetate, propyl acetate), aromatic solvents (such as toluene), ketone solvents (such as acetone, methyl ethyl ketone, methyl isobutyl ketone, cyclohexanone, diacetone alcohol); aliphatic hydrocarbons; chlorinated hydrocarbons (such as CH₂Cl₂); ethers (such as diethyl ether, tetrahydrofuran, propylene glycol monomethyl ether, diethylene glycol dimethyl ether, ethylene glycol monobutyl ether) and mixtures thereof. Preferred organic solvents include butyl acetate, methyl isobutyl ketone (MIBK), methyl ethyl ketone (MEK), propylene glycol monomethyl ether, methoxy propyl acetate (PMA), ethylene glycol monobutyl ether and mixtures thereof.

The solid content of the primer composition can be in the range from 10 to 90 wt.%, preferably 15 to 80 wt.%, more preferably 20 to 70 wt.%.

The primer composition is preferably provided in the form of a 2K coating composition. "2K coating composition" means that the coating composition is provided in the form of separate components, which are due to reactivity only mixed shortly before the application to a substrate. "Only mixed shortly before the application to a substrate" is a term well-known to a person skilled in the art. In the present case, the primer composition is preferably supplied in the form of an A component containing the polyaspartic acid ester, and a B component containing the polyisocyanate crosslinker. The mixing ratio of A to B components can be easily calculated by the skilled person based on the desired ratio of the functional groups.

The primer composition is preferably curable at ambient temperatures, e.g. at 15-30°C, preferably at 20°C.

The primer composition can further comprise conventional additives, such as flow control agents, dispersants, surfactants, plasticizers, thixotropic agents, light stabilizers and others.

The important feature of the invention is that the primer does not comprise epoxy-functional alkoxysilanes. Examples of such compounds include glycidyl silanes such as 3-glycidyloxypropyl-trimethoxysilane, 3-glycidyloxypropyltriethoxysilane, 3-glycidyloxypropyltriisopropoxysilane. Epoxy-functional alkoxysilanes are commercially available, for example under the trade names Dynasylan^{®} Glymo from Evonik, Silquest^{®} A187 and A186 from Momentive.

The use of epoxy-functional alkoxysilanes together with polyaspartic acid esters in coatings is known from WO2014138052. In that publication, epoxy-functional alkoxysilanes are shown to improve adhesion of a polyaspartate-containing clearcoat to the pigmented basecoat. In the present invention, however, it was discovered that when polyaspartate-containing coating composition is used directly on polycarbonate substrate as a primer, the use of epoxy-functional alkoxysilanes is not necessary. Adhesion to the polycarbonate substrate turned out to be excellent without the need to use epoxysilanes. or any alkoxysilanes.

More generally, the primer coating composition is preferably free from any type of alkoxysilanes, their derivatives, or condensation products thereof. Under "derivatives", reaction products of alkoxysilanes with other compounds, e.g. polymers, oligomers or monomers, are meant. In such reactions, the alkoxysilane group is typically preserved.

The possibility to avoid the use of epoxy-functional alkoxysilanes and alkoxysilanes in general offers many advantages. Silanes are known to be reactive and require special instructions for handling. The presence of silanes can adversely influence the pot-life of a coating composition. Less ingredients in the coating formula also means less cost, less complexity and easier handling.

### Other layers

The primer layer is overcoated with at least one topcoat layer. The at least one topcoat layer is obtained from a coating composition, which is different from the primer composition. The topcoat layer overlies directly or indirectly (with other layers in between) the primer layer.

Preferably, the topcoat layer that directly overlies the primer layer contains at least one organic binder resin. Preferably, it does not contain an inorganic hard coat such as those based on silica binders. Preferably, the topcoat is not a silicon-containing coating, which means it is free from silicon-containing binder resins. Such inorganic or hybrid (organically modified inorganic) coatings are typically prepared by condensation of alkoxysilanes or other sol-gel processes. Preferably the topcoat layer is not an inorganic or hybrid organic/inorganic coating. Silicon-containing coatings are for example known from EP-A 0 947 520.

Most preferably, the topcoat layer is an organic coating layer, meaning that it only contains organic binder resin(s).

The coating composition for at least one topcoat layer preferably comprises at least one organic binder resin, such as polyurethane, polyester, polyacrylate, or a mixture thereof. Optionally a crosslinker can be present, which comprises groups that are reactive towards the respective reactive groups of the binder resin(s). Such systems are known to the skilled person. Preferably, the topcoat composition comprises at least one hydroxyl-functional binder resin and a polyisocyanate crosslinker.

The topcoat layer can be pigmented (basecoat) or unpigmented (clearcoat), depending on the desired application. Two or more topcoat layers can be used in any combination. If a pigmented topcoat is used, it is preferred to further use a clearcoat layer to protect the basecoat.

In some embodiments, it can be preferred to have a completely clear system, which means that all the layers are clear (transparent). Such system is obtained, for example, by using a clear primer together with a clear top layer (clearcoat), with no pigmented layers in between. Completely clear coating systems can be used for coating transparent polycarbonate articles, e.g. automotive headlights. In other embodiments, however, a pigmented intermediate coat (i.e. basecoat) can be present between the primer layer and the clearcoat.

For the topcoat, especially if it is a clearcoat, it is preferred to use a (clear) coating composition that contains a hydroxyl-functional binder resin and a crosslinker reactive to the hydroxyl groups. More preferably, the crosslinker is a polyisocyanate crosslinker.

The OH-functional binder resin (polyol) in the topcoat composition (particularly, clearcoat composition) can be any conventional resin, such as polyurethane, polyacrylate, polyester, melamine polyols, and mixtures of these. Preferably, polyacrylate polyols, polyester polyols, melamine polyols or mixtures therefore are used. Melamine polyols refer to a reaction product of a melamine aldehyde resin with a diol, e.g. as those described in WO2007028792A1.

The polyols useful in the topcoat composition (particularly. clearcoat composition) can have a glass transition temperature (Tg) from -20 to 80°C. Also mixtures of polyols with different Tg can be used. For example, a mixture of a first polyol with Tg in the range -20 to 0°C and a second polyol with Tg in the range 45 to 80°C. In an alternative embodiment, it can be preferred to use a mixture of two polyols with a Tg of both in the range -20 to 0°C. Glass transition temperature Tg is determined by modulated differential scanning calorimetry (MDSC) with TA Instruments Q2000, done in modulation option, with an amplitude of 1°C, a period of 40 s and an underlying heating range of 5°C/min. Helium is used as purge gas at a flow of 50 ml/min. Standard two runs are performed (at once after each other in one method), the second run is used for Tg reporting.

Suitable polyols include commercially available under trade names Setalux^{®} and Setal^{®} from Allnex, particularly Setalux 1152 SS-60, Setalux 1192 SS-60, Setalux 1215 BA-68, Setal 1406, Setal 1606 BA-80.

In some embodiments, it can be preferred to use a mixture of polyacrylate and polyester polyols. In other embodiments, it can be preferred to use a mixture of polyacrylate and melamine polyols. Preferably, a mixture of polyacrylate and melamine polyols is used, more preferably, such mixture where both polyols have the Tg in the range -20 to 0°C.

In some embodiments, the topcoat composition (particularly, clearcoat composition) can further contain at least one polyaspartic acid ester as a binder resin. In other embodiments it can be preferred that the topcoat composition (particularly, clearcoat composition) does not contain polyaspartic acid esters.

The OH-functional binder resin preferably has a number average molecular weight (Mn) of 500 to 500,000, preferably 1,500 to 100,000, as determined by gel permeation chromatography (GPC) versus a polystyrene standard with tetrahydrofuran as the mobile phase.

The polyisocyanate crosslinker is preferably a compound that has free reactive isocyanate groups. Suitable compounds are for example those mentioned above for the primer composition.

Although not necessary, the topcoat composition (particularly, clearcoat composition) can comprise an epoxy-functional alkoxysilane as an adhesion promotor.

The topcoat composition (particularly, clearcoat composition) is preferably a solventborne composition. Same solvents as mentioned for the primer composition are suitable for the topcoat composition. More preferably, the topcoat composition is non-aqueous. The topcoat composition is preferably supplied in the form of a 2K composition.

In other embodiments, the system may comprise a primer as discussed above together with a pigmented basecoat and a clearcoat.

For the pigmented basecoat, any conventional basecoat composition can be used, which can be 1K or 2K, waterborne or solventborne. The basecoat composition can be physically drying or chemically crosslinking. The choice of a suitable crosslinker is made by the skilled person based on the functional groups of the resin binder present in the composition. The basecoat composition preferably contains pigments. Examples of pigments include color-imparting pigments such as titanium dioxide, zinc white, carbon black, iron manganese black, chromium oxides, iron oxides, azo pigments, quinacridone, perinone, phthalocyanine, aniline black, or effect pigments such as coated or uncoated aluminum, iron, copper effect pigments.

The topcoat composition can further comprise conventional additives, such as flow control agents, dispersants, surfactants, plasticizers, thixotropic agents, light stabilizers and others.

In some embodiments, the system as described above can also contain other coating layers on the back of the coated polycarbonate substrate. Such layers may include primer, basecoat and/or clearcoat layers.

### Application

The method for forming a multi-layer coating on a polycarbonate substrate according to the invention comprises the following steps:
a) applying the primer coating composition as described above directly to the substrate,
b) applying at least one topcoat composition, different from the primer coating composition, to the coated substrate, and
c) curing the multi-layer coating.

In step (a), the primer coating composition is applied onto the polycarbonate substrate.

The substrate does not need any pre-treatment that leads to surface modification or any pre-coating. In some embodiments, the primer coating composition can be cured before application of the further layer, although it is not necessary. Curing would typically find place at ambient conditions (several hours to 1 day) or can be accelerated by using elevated temperatures (e.g. 60°C). The skilled person is able to determine the suitable combination of the curing temperature and curing time.

In step (b), at least one topcoat composition is applied. This can be done either after curing the primer layer, or by wet-on-wet application. The latter means that the other layer composition is applied shortly after the primer composition has been applied. The flash-off time can typically be in the range 5-20 min.

Preferably, the at least one topcoat layer is a clearcoat. In some embodiments, a pigmented basecoat composition can be applied between steps a) and b) to obtain a basecoat layer.

The coating compositions can be applied by any conventional process, preferably by spray application. The multi-layer coating can be cured at room temperature or force-dried at elevated temperatures, e.g. up to 80°C, preferably from 40 to 60°C.

### Use

The multi-layer coating described above is particularly useful for coating polycarbonate parts in automotive, marine or aerospace industry. More particularly, the invention provides a coated automobile part, comprising the multilayer coating system on a polycarbonate substrate according to the invention. The automobile part can for example be selected from headlights, bumpers, tail gates and sunroof panels.

The invention will be explained in more detail on basis of the examples below. All parts and percentages are by weight unless otherwise indicated.

### Examples

### Description of the methods

"Dry 1 mm" - dry adhesion test based on ISO 2409:2013. Crosscuts with 1 mm distance are done in the coating until the substrate and then adhesion tape is applied and removed quickly under an angle of 90 degrees. Evaluation scale from 0 (best, no coating came off) to 5 (worst, a lot of coating came off). "Dry 2 mm" is the same but the distance between the cuts is 2 mm.

"Wet 1 mm" - wet adhesion test based on ISO 6270-1:1998. The test measures resistance to humidity after continuous condensation conditions. Crosscuts with 1 mm distance from each other are done in the coating until the substrate. The sample is then placed above a reservoir with water at 40°C for 240 and 480 hours, after which the test with adhesion tape is done. "Wet 2 mm" is the same but the distance between the cuts is 2 mm.

"Dry HPWJ" - adhesion test according to ISO 16925:2014 (Performed according to BMW AA-0136). An incision is made in the coating and the sample is subject to a high-pressure water jet for 2 min. Evaluation scale from 0 (best, no coating came off) to 5 (worst, a lot of coating came off). "Wet HPWJ" is the same but done after conditioning the samples with incisions for 240 or 480 hours at 100% humidity and 40°C.

Wet scratch resistance was assessed by measuring gloss loss and haze increase after a simulated car wash machine test according to BMW standard AA-0054. Determination of gloss values at 20° is done according to ISO 2813:2014. Reflection haze was measured according to ISO 13803:2014.

Clear primer compositions were prepared with components A and B according to Table 1 (amounts in g). The mix ratio A to B was varied: 100 g : 55 g (resin excess), 100 g : 63.9 g (stoichiometric) or 100 g : 100 g (isocyanate excess).

**Table 1 Primer composition**

| **Component A** | | | **Component B** | |
|---|---|---|---|---|
| Desmophen NH1420 - polyaspartic acid ester | 60 | | Desmodur N 3390 BA/SN - polyisocyanate HDI-trimer isocyanurate | 68.3 |
| Defoamer* | 0.4 | | n-Butyl acetate | 31.7 |
| Flow additive mix** | 2.5 | | | |
| n-Butyl acetate | 35.1 | | | |
| 2-Buthoxyethyl acetate | 2 | | | |
| Total (g) | 100 | | Total (g) | 100 |
| | | | | |

| | | | | |
|---|---|---|---|---|
| * Efka PB 2010 from BASF, 50% solids; ** mixture of Byk-300, Byk-310 in methoxypropyl acetate | | | | |

For comparative examples, primer compositions with epoxysilane were prepared. These compositions were the same as in Table 1, except that 1.5 wt.% or 3.5 wt.% of Dynasylan^{®} Glymo by Evonik was added to Component B based on the total weight of component B. Dynasylan GLYMO is a bifunctional 3-glycidyloxypropyltrimethoxysilane. For the compositions with the epoxysilane, the mix ratio of A to B was 100 g : 100 g.

The primer compositions were sprayed onto polycarbonate panels (Lexan LS2 by Sabic, dimensions 60 cm x 20 cm x 3 mm). Before application, the panels were degreased by isopropanol and dried with a soft cloth. After a 10 min flash-off, some of the panels were overcoated with a clearcoat (CC1 or CC2).

CC1 - clearcoat composition with components A and B. Component A contains 68 wt.% acrylic polyol (OH value 150 mg KOH/g, Tg 69°C, solid content 55 wt.%), 10 wt.% polyester polyol (OH value 170 mg KOH/g, Tg -7°C, solid content 85 wt.%), DBTDL, benzoic acid, UV absorbers, flow additive and solvents. Component B contains 45 wt.% HDI trimer isocyanate and solvents. Mixing ratio of A:B is 100:100.

CC2 - clearcoat composition with components A, B and C. Component A contains 60 wt.% acrylic polyol (OH value 140 mg KOH/g, Tg -6°C, solid content 74 wt.%), 13.7 wt.% melamine polyol (OH value 312 mg KOH/g, Tg -14°C, solid content 83 wt.%), DBTDL, benzoic acid, UV absorbers, flow additive and solvents. Component B contains 81 wt.% polyisocyanate HDI-trimer isocyanurate and solvents. Component C contains solvents. Mixing ratio A:B:C is 100:60:20.

The coated panels were allowed to cure for 1 week at ambient conditions before adhesion and scratch resistance tests are done. In addition, same polycarbonate panels were coated with Kwasny Spraymax system from Peter Kwasny GmbH, which is an existing commercial polycarbonate primer (epoxy-based, does not contain polyaspartic acid esters).

The coated panels were subjected to adhesion and wet scratch resistance tests.

First, adhesion tests were done for the systems without epoxysilane with different A:B ratios in the primer composition. The results are shown in Table 2.

**Table 2 Adhesion tests for different A:B ratios**

| # | Primer A:B, g:g | Clearcoat | Dry 1 mm | Dry 2 mm | Dry HPWJ | Wet 1 mm | Wet 2 mm | Wet HPWJ |
|---|---|---|---|---|---|---|---|---|
| | | | | | | | | |
| 1 | 100:55 | - | 0 | 0 | 0 | 0 | 0 | 0 |
| 2 | 100:63.9 | - | 0 | 0 | 0 | 0 | 0 | 0 |
| 3 | 100:100 | - | 0 | 0 | 0 | 0 | 0 | 0 |
| 4 | 100:55 | CC1 | 0 | 0 | 0 | 0 | 0 | 0 |
| 5 | 100:63.9 | CC1 | 0 | 0 | 0 | 0 | 0 | 0 |
| 6 | 100:100 | CC1 | 0 | 0 | 0 | 0 | 0 | 0 |
| 7 | 100:100 | CC2 | 0 | 0 | 0 | 0 | 0 | 0 |

As can be seen in Table 2, the mixing ratio A:B does not play a role for the adhesion test results. For all mixing ratios the adhesion of the coatings systems (primers or primers overcoated with a clearcoat) is excellent in all cases. For further tests, the mixing ratio A:B was selected to be 100:100.

Tables 3 and 4 show the results of adhesion and wet scratch resistance tests for the systems according to the invention and comparative systems.

**Table 3 Adhesion tests**

| # | Epoxysila ne in primer, wt.% | Clearco at | Dry 1 mm | Dry 2 mm | Dry HPWJ | Wet 1 mm | Wet 2 mm | Wet HPWJ |
|---|---|---|---|---|---|---|---|---|
| | | | | | | | | |
| 3* | - | - | 0 | 0 | 0 | 0 | 0 | 0 |
| 6 | - | CC1 | 0 | 0 | 0 | 0 | 0 | 0 |
| 7 | - | CC2 | 0 | 0 | 0 | 0 | 0 | 0 |
| 8* | 1.5 | - | 0 | 0 | 0 | 0 | 0 | 0 |
| 9* | 3.5 | - | 0 | 0 | 0 | 0 | 0 | 0 |
| 10* | 1.5 | CC1 | 0 | 0 | 0 | 0 | 0 | 0 |
| 11* | 1.5 | CC2 | 0 | 0 | 0 | 0 | 0 | 0 |
| 12* | Kwasny** | Kwasny | 0 | 3 | - | 0 (240h) | 0 (240h) | 0 (240h) |
| | | | | | | 5 (480h) | 5 (480h) | 5 (480h) |

| | | | | | | | | |
|---|---|---|---|---|---|---|---|---|
| * Comparative examples; **Kwasny Spraymax system consists of a cleaner, a primer and a clearcoat. | | | | | | | | |

**Table 4 Wet scratch resistance tests**

| | Epoxysilane in primer, wt.% | Clearcoat | Gloss 20° | | | Haze | | |
|---|---|---|---|---|---|---|---|---|
| | | | Initial | After test | Gloss loss (%) | Initial | After test | Haze increase |
| | | | | | | | | |
| 3* | - | - | 88.4 | 46.9 | 47 | 12.2 | 68.9 | 6 |
| 6 | - | CC1 | 85.9 | 49.8 | 42 | 48.3 | 83.7 | 1 |
| 7 | - | CC2 | 87.3 | 72.7 | 17 | 15.5 | 38.1 | 2 |
| 8* | 1.5 | - | 88.8 | 49.5 | 44 | 14.3 | 66.5 | 5 |
| 9* | 3.5 | - | 88.5 | 53.7 | 39 | 11.7 | 58.5 | 5 |
| 10* | 1.5 | CC1 | 81.2 | 46.0 | 43 | 108 | 102 | 1 |
| 11* | 1.5 | CC2 | 87.4 | 65.2 | 25 | 14.2 | 49.5 | 3 |

As can be seen from these tables, comparative system 3 (no clearcoat) has excellent adhesion but poor wet scratch resistance (loss of gloss and particularly haze increase).

This does not significantly change when the primer contains epoxysilane (comparative systems 8, 9).

The coating systems according to the invention (6, 7) show excellent dry and wet adhesions result, similar to the comparative systems with epoxysilane (10, 11), despite the fact that there is no epoxy silane in the primer. Wet scratch resistance of the inventive coating systems without epoxysilane (6, 7) is as good or even better than that of comparative systems with epoxysilane (10-11). The content of epoxysilane does not seem to play any role. The results surprisingly show that it is possible to achieve excellent adhesion and scratch resistance results on polycarbonate substrate without the need to use epoxysilane in the primer.

Commercial benchmark product 12 (not containing polyaspartic acid esters) shows some delamination in the "Dry 2 mm" test and complete delamination in the wet adhesion tests after 480 hours.

## Claims

1. A multi-layer coating system on a polycarbonate substrate, comprising:
- a primer layer applied directly to the substrate, wherein the primer layer is obtained from a primer coating composition, which comprises at least one polyaspartic acid ester and at least one polyisocyanate crosslinker, which primer coating composition does not comprise epoxy-functional alkoxysilanes and is free from compounds with reactive OH groups,
- at least one organic topcoat layer overlying the primer layer, which organic topcoat layer is obtained from a coating composition different from the primer composition.

2. The coating system according to claim 1, wherein the polyaspartic acid ester is prepared from a diamine and a maleic or fumaric acid ester, wherein the diamine is selected from 4,4'-diaminodicyclohexylmethane and 3,3'-dimethyl-4,4'-diaminodicyclo-hexylmethane.

3. The coating system according to claim 1 or 2, wherein the primer coating composition is a solventborne composition.

4. The coating system according to any one of claims 1-3, wherein the primer coating composition is clear.

5. The coating system according to any one of claims 1-4, wherein the topcoat layer is a clearcoat.

6. The coating system according to claim 5, comprising further a pigmented basecoat layer between the primer and the clearcoat.

7. The coating system according to any one of claims 5-6, wherein the clearcoat layer is obtained from a coating composition comprising at least one hydroxyl-functional binder resin and a crosslinker reactive to the hydroxyl groups.

8. The coating system according to claim 7, wherein the crosslinker in the clearcoat composition is a polyisocyanate crosslinker.

9. The coating system according to claim 7 or 8, wherein the hydroxyl-functional binder resin is selected from polyurethane, polyacrylate, polyester, melamine polyols or mixtures thereof.

10. A method for forming a multi-layer coating on a polycarbonate substrate according to any one of claims 1-9, comprising the steps of:
a) applying the primer coating composition directly to the substrate,
b) applying at least one organic topcoat composition, different from the primer coating composition, to the coated substrate, and
c) curing the multi-layer coating.

11. The method according to claim 10, comprising additionally a step of curing the primer coating composition after step a).

12. The method according to claim 10 or 11, wherein the at least one topcoat composition is a clearcoat composition.

13. The method according to claim 12, further comprising a step of applying a pigmented basecoat between steps a) and b).

14. Coated automobile part, comprising the multilayer coating system on a polycarbonate substrate according to any one of claims 1-9.

## Patentansprüche

1. Mehrschichtiges Beschichtungssystem auf einem Polycarbonatsubstrat, umfassend:
- eine direkt auf das Substrat aufgebrachte Grundierungsschicht, wobei die Grundierungsschicht aus einer Grundierungszusammensetzung erhalten ist, die wenigstens einen Polyasparaginsäureester und wenigstens einen Polyisocyanat-Vernetzer enthält, wobei die Grundierungszusammensetzung keine epoxyfunktionellen Alkoxysilane enthält und frei von Verbindungen mit reaktiven OH-Gruppen ist,
- wenigstens eine organische Deckschicht, die über der Grundierungsschicht liegt, wobei die organische Deckschicht aus einer von der Grundierungszusammensetzung verschiedenen Beschichtungszusammensetzung erhalten ist.

2. Beschichtungssystem nach Anspruch 1, wobei der Polyasparaginsäureester aus einem Diamin und einem Maleinsäureester oder einem Fumarsäureester hergestellt ist, wobei das Diamin ausgewählt ist aus 4,4'-Diaminodicyclohexylmethan und 3,3'-Dimethyl-4,4'-diaminodicyclohexylmethan.

3. Beschichtungssystem nach Anspruch 1 oder 2, wobei die Grundierungszusammensetzung eine Zusammensetzung auf Lösungsmittelbasis ist.

4. Beschichtungssystem nach einem der Ansprüche 1-3, wobei die Grundierungszusammensetzung klar ist.

5. Beschichtungssystem nach einem der Ansprüche 1-4, wobei die Deckschicht ein Klarlack ist.

6. Beschichtungssystem nach Anspruch 5, ferner umfassend eine pigmentierte Grundschicht zwischen der Grundierung und dem Klarlack.

7. Beschichtungssystem nach einem der Ansprüche 5-6, wobei die Klarlackschicht aus einer Beschichtungszusammensetzung erhalten ist, die wenigstens ein hydroxyfunktionelles Bindemittelharz und einen gegenüber den Hydroxygruppen reaktiven Vernetzer umfasst.

8. Beschichtungssystem nach Anspruch 7, wobei der Vernetzer in der Klarlackzusammensetzung ein Polyisocyanat-Vernetzer ist.

9. Beschichtungssystem nach Anspruch 7 oder 8, wobei das hydroxyfunktionelle Bindemittelharz ausgewählt ist aus Polyurethan, Polyacrylat, Polyester, Melaminpolyolen und Gemischen davon.

10. Verfahren zur Herstellung einer mehrschichtigen Beschichtung auf einem Polycarbonatsubstrat nach einem der Ansprüche 1-9, umfassend die Schritte:
a) Aufbringen der Grundierungszusammensetzung direkt auf das Substrat,
b) Aufbringen wenigstens einer organischen Deckschichtzusammensetzung, die von der Grundierungszusammensetzung verschieden ist, auf das beschichtete Substrat, und
c) Härten der mehrschichtigen Beschichtung.

11. Verfahren nach Anspruch 10, umfassend zusätzlich einen Schritt des Härtens der Grundierungszusammensetzung nach Schritt a).

12. Verfahren nach Anspruch 10 oder 11, wobei die wenigstens eine Deckschichtzusammensetzung eine Klarlackzusammensetzung ist.

13. Verfahren nach Anspruch 12, ferner umfassend einen Schritt des Aufbringens einer pigmentierten Grundschicht zwischen Schritten a) und b).

14. Beschichtetes Automobilteil, umfassend das mehrschichtige Beschichtungssystem auf einem Polycarbonatsubstrat nach einem der Ansprüche 1-9.

## Revendications

1. Système de revêtement multicouche sur un substrat de polycarbonate, comprenant :
- une couche d'apprêt appliquée directement sur le substrat, dans lequel la couche d'apprêt est obtenue à partir d'une composition de revêtement d'apprêt, qui comprend au moins un ester de poly(acide aspartique) et au moins un agent de réticulation de polyisocyanate, laquelle composition de revêtement d'apprêt ne comprend pas d'alcoxysilanes fonctionnalisés par époxy et est exempte de composés comportant des groupes OH réactifs,
- au moins une couche de finition organique superposée sur la couche d'apprêt, laquelle couche de finition organique est obtenue à partir d'une composition de revêtement différente de la composition d'apprêt.

2. Système de revêtement selon la revendication 1, dans lequel l'ester de poly(acide aspartique) est préparé à partir d'une diamine et d'un ester d'acide maléique ou fumarique, dans lequel la diamine est choisie parmi le 4,4'-diaminodicyclohexylméthane et le 3,3'-diméthyl-4,4'-diaminodicyclo-hexylméthane.

3. Système de revêtement selon la revendication 1 ou 2, dans lequel la composition de revêtement d'apprêt est une composition à base de solvant.

4. Système de revêtement selon l'une quelconque des revendications 1 à 3, dans lequel la composition de revêtement d'apprêt est transparente.

5. Système de revêtement selon l'une quelconque des revendications 1 à 4, dans lequel la couche de finition est un revêtement transparent.

6. Système de revêtement selon la revendication 5, comprenant en outre une couche de revêtement de base pigmenté entre l'apprêt et le revêtement transparent.

7. Système de revêtement selon l'une quelconque des revendications 5 à 6, dans lequel la couche de revêtement transparent est obtenue à partir d'une composition de revêtement comprenant au moins une résine liante à fonction hydroxyle et un agent de réticulation réactif vis-à-vis des groupes hydroxyle.

8. Système de revêtement selon la revendication 7, dans lequel l'agent de réticulation dans la composition de revêtement transparent est un agent de réticulation de polyisocyanate.

9. Système de revêtement selon la revendication 7 ou 8, dans lequel la résine liante à fonction hydroxyle est choisie parmi le polyuréthane, le polyacrylate, le polyester, les mélamine polyols ou leurs mélanges.

10. Procédé de formation d'un revêtement multicouche sur un substrat de polycarbonate selon l'une quelconque des revendications 1 à 9, comprenant les étapes de :
a) application de la composition de revêtement d'apprêt directement sur le substrat,
b) application d'au moins une composition de finition organique, différente de la composition de revêtement d'apprêt, sur le substrat revêtu, et
c) durcissement du revêtement multicouche.

11. Procédé selon la revendication 10, comprenant en outre une étape de durcissement de la composition de revêtement d'apprêt après l'étape a).

12. Procédé selon la revendication 10 ou 11, dans lequel l'au moins une composition de finition est une composition de revêtement transparent.

13. Procédé selon la revendication 12, comprenant en outre une étape d'application d'un revêtement de base pigmenté entre les étapes a) et b).

14. Pièce automobile revêtue, comprenant le système de revêtement multicouche sur un substrat de polycarbonate selon l'une quelconque des revendications 1 à 9.
